# EUROPEAN PATENT SPECIFICATION

(11) **EP 3 896 548 B1**
(45) Date of publication and mention of the grant of the patent: **14.02.2024**
(21) Application number: 21162356.6
(22) Date of filing: 12.03.2021
(51) Int. Cl.: G05D 1/00, G05D 1/08, G05D 1/10, B64C 39/02, B60Q 1/00

(54) **HELICOPTER LIGHTING SYSTEM, HELICOPTER COMPRISING THE SAME, AND METHOD OF ILLUMINATING AN ENVIRONMENT OF A HELICOPTER**
HUBSCHRAUBERBELEUCHTUNGSSYSTEM, HUBSCHRAUBER DAMIT UND VERFAHREN ZUR BELEUCHTUNG EINER UMGEBUNG EINES HUBSCHRAUBERS
SYSTÈME D'ÉCLAIRAGE D'HÉLICOPTÈRE, HÉLICOPTÈRE LE COMPRENANT ET PROCÉDÉ D'ÉCLAIRAGE D'UN ENVIRONNEMENT D'UN HÉLICOPTÈRE

(30) Priority: 17.04.2020 DE 102020110512
(43) Date of publication of application: 20.10.2021
(73) Proprietor: Goodrich Lighting Systems GmbH & Co. KG, 59557 Lippstadt (DE)
(72) Inventor: DEPTA, Marion, 59555 Lippstadt (DE); MENNE, Norbert, 33106 Paderborn (DE)
(74) Representative: Schmitt-Nilson Schraud Waibel Wohlfrom Patentanwälte Partnerschaft mbB

(56) References cited:
- US-A1- 2015 377 405
- US-A1- 2017 313 416
- US-B1- 10 249 200

## Description

The invention relates to an exterior lighting system for a helicopter ("helicopter lighting system"). The invention further relates to a helicopter, comprising such a helicopter lighting system, and to a method of illuminating an environment of a helicopter with a helicopter lighting system.

Helicopters often have exterior lights, in particular helicopter search lights, which are configured for emitting a light beam in order to enhance the visibility of target objects, including human beings, under adverse visibility conditions, e.g. during the night or when the helicopter is flying through fog, rain, etc. Obstacles located between the helicopter and the target object, however, may interfere with light beams emitted from the helicopter, preventing an efficient illumination of the target object.

US 10 249 200 B1 discloses an unmanned aerial vehicle (UAV), which may be programmed to fly to a delivery area, such as a neighborhood, a block, a large residential or commercial property, and/or another area associated with landing and/or a delivery. Approaching the delivery area, the UAV may deploy one or more delivery area guidance vehicles. The guidance vehicle may be configured to maneuver a distance from the UAV, and to assist in guiding the UAV into the delivery area to the UAV.

US 2017 313 416 A1 discloses an aerial imaging system and method of aerially capturing an image including a first unmanned aerial vehicle (UAV) and a second UAV. The first UAV includes a camera and may be configured to receive input from an operator. The second UAV may be configured to dock with and deploy from the first UAV. The second UAV includes a light configured to provide remote illumination for the camera. The light on the second UAV may be activated to illuminate a target of photography by the camera while the second UAV is flown separate from the first UAV.

It would be beneficial to provide a helicopter lighting system with improved lighting capabilities; in particular a helicopter lighting system which allows for efficiently illuminating a target object in a wide range of operating scenarios.

According to an exemplary embodiment of the invention, the helicopter lighting system comprises a docking station, which is configured to be mounted to a helicopter and configured for allowing an unmanned aerial vehicle ("UAV") to dock to and to separate from the docking station.

The helicopter lighting system further comprises an unmanned aerial vehicle, in particular an unmanned aerial vehicle of a multicopter type, which is configured for docking to and separating from the docking station. The unmanned aerial vehicle includes at least one adjustable lighting device, which allows adjusting the distribution of light emitted by the adjustable lighting device, and which is configured for illuminating at least one target object or area visible from the helicopter.

The at least one adjustable lighting device comprises an adjustable optical element, which is adjustable for modifying the distribution of light emitted by the respective lighting device; and/or a plurality of light sources, which are individually switchable for modifying the distribution of light emitted by the respective lighting device. Modifying the distribution of light emitted by the respective lighting device includes at least one of: switching between a flood light mode and a search light mode; adapting a focus of a light beam emitted by the at least one adjustable lighting device in the search light mode; and changing a direction of the light beam emitted by the at least one adjustable lighting device in the search light mode.

Exemplary embodiments of the invention also include a helicopter comprising a helicopter lighting system according to an exemplary embodiment of the invention, wherein the docking station is mounted to the helicopter. The docking station in particular may be mounted to a fuselage of the helicopter, more particularly to an underside of the fuselage of the helicopter.

Exemplary embodiments of the invention further include a method of illuminating an environment of a helicopter with a helicopter lighting system, wherein the helicopter lighting system comprises a docking station mounted to the helicopter, and an unmanned aerial vehicle including at least one adjustable lighting device comprising an adjustable optical element and/or a plurality of light sources, which are individually switchable for modifying the distribution of light emitted by the respective lighting device, wherein the adjustable optical element and/or the plurality of light sources, wherein the adjustable optical element and/or the plurality of light sources allow modifying the distribution of light emitted by the adjustable lighting device; wherein the unmanned aerial vehicle is configured for docking to and separating from the docking station; and wherein the method includes: separating the unmanned aerial vehicle from the docking station; activating the at least one adjustable lighting device; and illuminating at least one target object or area visible from the helicopter with the at least one adjustable lighting device of the unmanned aerial vehicle by controlling the operation, in particular the flight operation, of the unmanned aerial vehicle, and by modifying the distribution of light emitted by the at least one adjustable lighting device. Modifying the distribution of light emitted by the respective lighting device includes at least one of: switching between a flood light mode and a search light mode; adapting a focus of a light beam emitted by the at least one adjustable lighting device in the search light mode; and changing a direction of the light beam emitted by the at least one adjustable lighting device in the search light mode.

The skilled person understands that the order of separating the unmanned aerial vehicle from the docking station and activating the at least one adjustable lighting device is arbitrary. I.e. the at least one adjustable lighting device may be activated before or after the separation of the unmanned aerial vehicle from the docking station.

According to exemplary embodiments of the invention, the unmanned aerial vehicle is configured for operating as a remote adjustable lighting device, configured for illuminating at least one target object or area when in flight at a position remote from the helicopter. The target object or area may be efficiently illuminated by operating the at least one adjustable lighting device of the unmanned aerial vehicle. The unmanned aerial vehicle may be flown to a position that is closer to the target object or area and/or that has a more unimpeded line of sight to the target object or area. In consequence, the illumination of the target object or area may be improved, as compared to an illumination via a helicopter-mounted search light. The target object or area may be efficiently illuminated in situations where obstacles between the helicopter and the target object or area are present, without changing the position of the helicopter. The target object or area being visible from the helicopter means that it is within viewing distance from the helicopter. It does not mean that the view from the helicopter to the target object or area has to be unimpeded. To the contrary, the described helicopter lighting system allows for a remote illumination of the target object or area that may not be possible via a helicopter-mounted search light, e.g. due to obstacles being present.

The at least one adjustable lighting device of the unmanned aerial vehicle comprises light generation means, i.e. active light sources, such as LEDs, which are configured for generating the light used for illuminating the at least one target object or area.

When docked to the docking station, the unmanned aerial vehicle is in temporary engagement with the docking station. The engagement between the unmanned aerial vehicle and the docking station may be strong enough to withstand aerodynamic forces occurring when the helicopter is in flight. It is also possible that the unmanned aerial vehicle and the docking station are protected from aerodynamic forces by a shield, arranged over the unmanned aerial vehicle when docked to the docking station.

In an embodiment, a docking portion, in particular a docking surface, of the unmanned aerial vehicle is in engagement, in particular in a form-fitting engagement, with a corresponding docking portion formed at the docking station, when the unmanned aerial vehicle is docked to the docking station.

In an embodiment, at least one of the docking station and the unmanned aerial vehicle comprises a fixing mechanism, configured for a positional fixation of the unmanned aerial vehicle with respect to the docking station, when the unmanned aerial vehicle is docked to the docking station.

In an embodiment, the fixing mechanism includes a mechanical locking mechanism, comprising at least two locking elements, which are engaged with each other in a locking configuration and which may be disengaged from each other for unlocking the locking mechanism, in order to allow the unmanned aerial vehicle to separate from the docking station. The mechanical locking mechanism may be driven electrically, electromagnetically, hydraulically and/or pneumatically.

In an embodiment, the fixing mechanism includes a magnetic, in particular an electromagnetic, fixing mechanism, which is configured for providing a positional fixation of the unmanned aerial vehicle with respect to the docking station by magnetic forces, in particular by electromagnetic forces.

In an embodiment, the magnetic fixing mechanism includes at least one metallic or magnetic element, in particular a permanent magnet, mounted to one of the docking station and the unmanned aerial vehicle. The magnetic fixing mechanism further includes at least one electromagnet, mounted to the other one of the docking station and the unmanned aerial vehicle. In such a configuration, the unmanned aerial vehicle can be reliably positioned with respect to the docking station by activating the at least one electromagnet.

In an embodiment, the unmanned aerial vehicle is fixed to the docking station by at least one permanent magnet, interacting with a metallic or magnetic element. For releasing the unmanned aerial vehicle from the docking station, an additional electromagnet is provided, which, when activated, counteracts the magnetic force of the at least one permanent magnet, thereby allowing the unmanned aerial vehicle to separate from the docking station.

In an embodiment, the at least one lighting device is configured for illuminating target objects and/or areas located in distances between 5 m (16,41 ft) and 100 m (328,10 ft) from the unmanned aerial vehicle, in particular target objects and/or areas located in distances between 10 m (32,81 ft) and 50 m (164,05 ft) from the unmanned aerial vehicle, more particularly target objects and/or areas located in distances of 15 m (49,22 ft) to 25 m (82,03 ft) from the unmanned aerial vehicle.

In an embodiment, the unmanned aerial vehicle is a multicopter comprising a plurality of rotors. The unmanned aerial vehicle in particular may be a quadrocopter comprising four rotors, or an octocopter comprising eight rotors.

In an embodiment, the unmanned aerial vehicle comprises a rechargeable power source, in particular an electric rechargeable power source, such as a rechargeable battery. The rechargeable power source is configured for providing the power necessary for operating the unmanned aerial vehicle and for operating the at least one lighting device without a physical connection between the unmanned aerial vehicle and the helicopter.

In an embodiment, the at least one lighting device is configured to act as a search light, i.e. the at least one lighting device is configured for emitting a focused light beam, which may be directed onto a target object and/or onto a target area.

In an embodiment, the at least one lighting device may be configured for alternatively acting as a flood light, i.e. as a light configured for illuminating a large area below and/or in front of the helicopter.

In an embodiment, the at least one lighting device may be switchable between a search light mode and a flood light mode.

In an embodiment, the helicopter lighting system comprises a wired or wireless data connection between the unmanned aerial vehicle and the helicopter, in particular between the unmanned aerial vehicle and the docking station. The data connection is configured to allow transmitting control commands for controlling the unmanned aerial vehicle from the helicopter, in particular from the docking station, to the unmanned aerial vehicle.

The data connection may be configured for transmitting control commands to the unmanned aerial vehicle when it is located in a distance of up to to 200 m (656,20 ft), in particular in a distance of up to 500 m (1640,50 ft), more particularly in a distance of up to 1000 m (3281 ft) from the helicopter.

In an embodiment, the data connection includes a transmitter located at or within the helicopter, in particular within the docking station, and a corresponding receiver located within the unmanned aerial vehicle.

In an embodiment, the data connection between the helicopter and the unmanned aerial vehicle is configured as a bidirectional data connection, i.e. as a data connection which additionally allows transmitting signals from the unmanned aerial vehicle to the helicopter. Said signals may include signals confirming that the unmanned aerial vehicle received control signals form the helicopter; signals indicating an operational status of the unmanned aerial vehicle, such as a charge level of a power source provided in the unmanned aerial vehicle; and/or signals provided by at least one sensor, such as a camera and/or a radar sensor, provided in the unmanned aerial vehicle.

In an embodiment, the helicopter lighting system comprises a mechanical tethering device, extending between the docking station and the unmanned aerial vehicle and mechanically connecting the unmanned aerial vehicle with the docking station. The mechanical tethering device may include a flexible elongated element, such as a line or cord, which may be made of steel and/or a synthetic material. The mechanical tethering device may be configured for pulling the unmanned aerial vehicle back to the docking station.

A tethering device allows for retrieving the unmanned aerial vehicle in case the unmanned aerial vehicle is not able to return to the docking station on its own, for example due to strong fall winds generated by a rotor of the helicopter, due to an interruption of the data connection between the helicopter and the unmanned aerial vehicle, due to loss of power of the power source of the unmanned aerial vehicle, and/or due to a malfunction of the unmanned aerial vehicle.

In an embodiment, the tethering device includes at least one wire connection, providing a wired data connection between the unmanned aerial vehicle and the docking station, which allows for transmitting data such as control commands and/or sensor signals between the helicopter and the unmanned aerial vehicle. A wired data connection provides a reliable data connection, in particular a data connection which is robust against electromagnetic interference. The tethering device may also include a wire connection configured for supplying electric power from the helicopter to the unmanned aerial vehicle.

In an embodiment, the tethering device is selectively detachable from the unmanned aerial vehicle and/or from the docking station. The tethering device in particular may be detachable from the unmanned aerial vehicle and/or from the docking station by sending a detach command to the unmanned aerial vehicle and/or to the docking station.

A separating mechanism, which allows selectively detaching the tethering device, may be provided at the unmanned aerial vehicle and/or at the docking station.

Such a configuration allows for detaching the tethering device from the unmanned aerial vehicle and/or from the docking station for separating the unmanned aerial vehicle from the helicopter, in case the unmanned aerial vehicle gets stuck and therefore cannot be retracted to the docking station. It also allows for separating the unmanned aerial vehicle from the helicopter, in case the unmanned aerial vehicle is intended to operate at large distances from the helicopter, which are beyond the maximum length of the tethering device.

In an embodiment, the docking station includes a launching mechanism, configured for launching the unmanned aerial vehicle. The launching mechanism may in particular include an ejection mechanism, which is configured for ejecting the unmanned aerial vehicle from the docking station.

When the helicopter is in flight, strong fall winds are generated by the rotating main rotor(s) of the helicopter. Due to its limited size and weight, the power of the unmanned aerial vehicle is limited as well. As a result, it may be difficult for the unmanned aerial vehicle to pass said fall winds for separating from the helicopter using its own force. A launching mechanism, in particular an ejection mechanism, allows the unmanned aerial vehicle to separate from the helicopter by launching the unmanned aerial vehicle with sufficient speed and/or acceleration, in order to pass the fall winds generated by the main rotor(s) of the helicopter. In other words, the launching mechanism may be configured for "throwing" or "shooting" the unmanned aerial vehicle through the region of strong fall winds ("fall wind region") generated around the helicopter. When the unmanned aerial vehicle has passed said fall wind region, the unmanned aerial vehicle may operate on its own.

In an embodiment, the launching mechanism includes a tossing mechanism, which is configured for tossing the unmanned aerial vehicle from the docking station. The tossing mechanism may operate mechanically, hydraulically, pneumatically.

In an embodiment, the launching mechanism includes a shooting mechanism, which is configured for shooting the unmanned aerial vehicle through the fall wind region by igniting an explosive charge.

The previously mentioned fall winds may also prevent the unmanned aerial vehicle from returning to the docking station on its own.

In an embodiment, the docking station therefore includes a docking arm, extending from the docking station beyond the fall wind region around the helicopter, in order to allow the unmanned aerial vehicle to dock to the docking arm beyond said fall wind region.

In an embodiment, the docking arm is movable, in particular extendable and retractable. The docking arm may be extended for allowing the unmanned aerial vehicle to dock to the docking arm beyond said fall wind region. The docking arm may then be retracted for retrieving the unmanned aerial vehicle, which has docked to the docking arm, back to the docking station. The docking arm also may be in a retracted position, when not in use.

In an embodiment, the docking arm has a maximum length of 2 m (6,56 ft) to 10 m (32,81 ft), in particular a maximum length of 4 m (13,12 ft) to 8 m (26,25 ft), more particularly a maximum length of 5 m (16,41 ft). The maximum length of the docking arm may in particular be a function of the dimensions of the helicopter, more particularly of the diameter of the main rotor(s) of the helicopter.

In an embodiment, the docking arm is pivotable around an axis extending basically vertically through the helicopter, i.e. basically parallel to or coinciding with the rotating axis of the main rotor(s) of the helicopter, in order to allow the unmanned aerial vehicle to selectively dock to the docking arm in regions in front of, laterally from and behind the helicopter.

In an embodiment, the unmanned aerial vehicle comprises a plurality of lighting devices. The plurality of lighting devices may be individually switchable. The plurality of lighting devices may be configured for emitting light into different directions. In such a configuration, the distribution of light emitted by the unmanned aerial vehicle may be amended by selectively switching the plurality of light devices on and off. In particular, the direction of a light beam emitted by the unmanned aerial vehicle, i.e. by the combination of lighting devices provided at the unmanned aerial vehicle, may be changed by selectively switching the plurality of light devices on an off. This reduces or even eliminates the need for moving the unmanned aerial vehicle in order to change the distribution of light emitted by the unmanned aerial vehicle.

In an embodiment, each of the lighting devices comprises at least one active light source, in particular at least one LED.

In an embodiment, each of the lighting devices comprises a plurality of light sources, and the distribution of light emitted by each of the lighting devices is adjustable by selectively switching the plurality of light sources on and off.

In an embodiment, each of the at least one lighting device comprises an adjustable optical system, which may be adjusted for modifying the distribution of light emitted by the respective lighting device. The optical system may include at least one of a lens and a reflector. Modifying the distribution of light, emitted by the respective lighting device, may in particular include changing the focus and/or the direction of a light beam, emitted by the respective lighting device. The unmanned aerial vehicle may comprise one or several of such adjustable lighting devices.

In an embodiment, the unmanned aerial vehicle comprises at least one movable, in particular at least one pivotable, lighting device, which allows adjusting the distribution of light, emitted by the unmanned aerial vehicle, by moving, in particular by pivoting, the lighting device with respect to the unmanned aerial vehicle.

In an embodiment, the at least one lighting device is stationary with respect to the unmanned aerial vehicle and/or the distribution of light, emitted by the unmanned aerial vehicle, is not adjustable. In this case, the target object or area may still be efficiently illuminated. In particular, the target object or area may be illuminated by flying the unmanned aerial vehicle to a position from where the stationary set-up of the at least one lighting device allows for the light, emitted by the unmanned aerial vehicle, to reach the target object or area.

In an embodiment, the unmanned aerial vehicle comprises at least one sensor configured for gathering information from the environment of the unmanned aerial vehicle. The at least one sensor may include a camera and/or a radar sensor.

The information gathered by the at least one sensor may be transmitted wirelessly or via a wired data connection to the helicopter, in particular via the docking station mounted to the helicopter, in order to provide additional information to the crew of the helicopter.

Alternatively or additionally, the information gathered by the at least one sensor may be used for autonomously controlling the unmanned aerial vehicle and/or the at least one lighting device. The information may in particular be used for directing a light beam, emitted by the at least one lighting device, to a detected target object and/or causing the light beam to follow said target object.

The information provided by the at least one sensor may also be used for preventing the unmanned aerial vehicle from colliding with other objects and/or from crashing into the ground.

In an embodiment, the unmanned aerial vehicle comprises a lighting controller, which is configured for controlling the operation of the at least one lighting device, in particular for adjusting the distribution of light, emitted by the at least one lighting device.

In an embodiment, the lighting controller is in particular configured for controlling the operation of the at least one lighting device based on control commands received from the helicopter.

Alternatively or additionally, the lighting controller may be configured for autonomously controlling the operation of the at least one lighting device, in particular based on signals provided by at least one sensor provided in the unmanned aerial vehicle.

The lighting controller may in particular be configured for autonomously controlling the operation of the at least one lighting device, when the connection with the helicopter is interrupted and the unmanned aerial vehicle is not able to receive control commands from the helicopter, e.g. due to a malfunction or because the distance between the helicopter and the unmanned aerial vehicle exceeds the maximum transmission range of the data connection.

In an embodiment, the unmanned aerial vehicle further comprises a flight controller, which is configured for controlling the flight of the unmanned aerial vehicle.

In an embodiment, the flight controller is configured for controlling the operation of the unmanned aerial vehicle based on control commands received from the helicopter.

Alternatively or additionally, the flight controller may be configured for autonomously controlling the operation of the unmanned aerial vehicle, in particular based on signals provided by at least one sensor provided in the unmanned aerial vehicle.

The flight controller may in particular be configured for autonomously controlling the operation of the unmanned aerial vehicle when the connection with the helicopter is interrupted and the unmanned aerial vehicle is not able to receive control commands from the helicopter, e.g. due to a malfunction or because the distance between the helicopter and the unmanned aerial vehicle exceeds the maximum transmission range of the data connection.

In an embodiment, a method of illuminating an environment of a helicopter with a helicopter lighting system includes controlling the operation of the unmanned aerial vehicle by transmitting control commands from the helicopter to the unmanned aerial vehicle. The control commands may in particular be transmitted wirelessly or via at least one wire connection, extending between the helicopter and the unmanned aerial vehicle.

In an embodiment, separating the unmanned aerial vehicle includes launching the unmanned aerial vehicle from the docking station, in particular ejecting the unmanned aerial vehicle from the docking station, in order to allow the unmanned aerial vehicle to pass the region of strong falls winds surrounding the helicopter.

In an embodiment, the method further includes docking the unmanned aerial vehicle to the docking station and securely connecting the unmanned aerial vehicle with the helicopter. Docking the unmanned aerial vehicle to the docking station may also include establishing an electric connection between the docking station and the unmanned aerial vehicle, in order to allow transferring electric power to the unmanned aerial vehicle for recharging a rechargeable power source of the unmanned aerial vehicle.

In an embodiment, the method includes docking the unmanned aerial vehicle to a docking arm, extending from the docking station. This allows the unmanned aerial vehicle to dock to the docking arm in a region beyond the fall winds, generated by the operating rotor(s) of the helicopter.

In an embodiment, the method includes operating the unmanned aerial vehicle in a distance of between 10 m (32,81 ft) and 1000 m (3281 ft), in particular in a distance of between 100 m (328, 10 ft) and 500 m (1640,50 ft), more particularly in a distance of up to 200 m (656,20 ft), from the helicopter.

Further exemplary embodiments are described with respect to the accompanying drawings, wherein:
Figure 1 shows a schematic perspective view of a helicopter with a helicopter lighting system according to an exemplary embodiment of the invention.
Figure 2 shows an enlarged schematic side view of the helicopter lighting system of Figure 1, comprising a docking station and an unmanned aerial vehicle.
Figure 3A shows a further enlarged plan view of an unmanned aerial vehicle, when viewed from below, the unmanned aerial vehicle being usable in a helicopter lighting system according to an exemplary embodiment of the invention.
Figure 3B shows a cross-sectional view of the unmanned aerial vehicle of Figure 3A along line A-A depicted in Figure 3A.
Figure 4 depicts a cross-sectional side view through a lighting device, which may be used in a helicopter lighting system according to an exemplary embodiment of the invention.
Figure 5 shows a cross-sectional view of an exemplary embodiment of corresponding docking portions formed at a docking station and an unmanned aerial vehicle, respectively.
Figure 6 shows a schematic perspective view of a helicopter, comprising a helicopter lighting system according to an exemplary embodiment of the invention, including a docking arm.
Figure 7 shows a schematic perspective view of a helicopter comprising a helicopter lighting system according to an exemplary embodiment of the invention, including a tethering device.
Figure 8 depicts a helicopter lighting system according to an exemplary embodiment of the invention in operation.

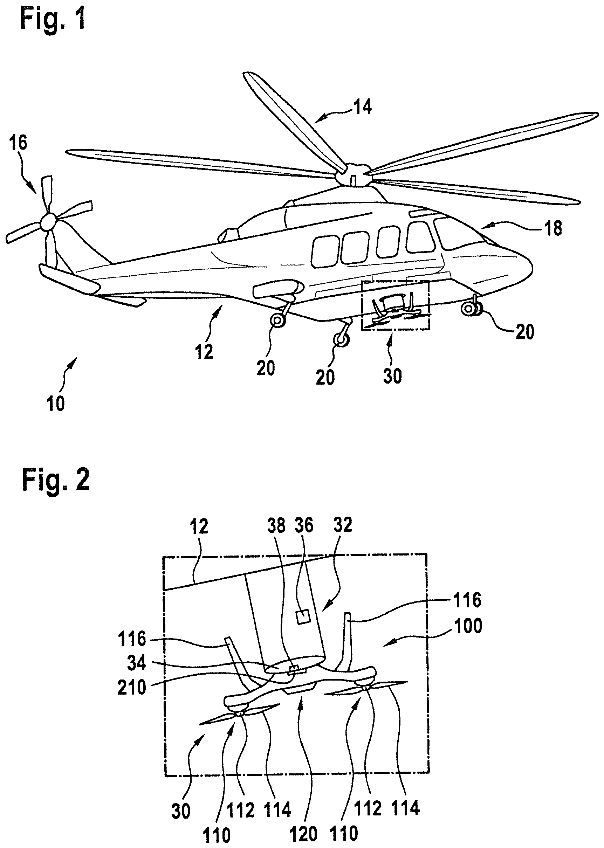

Figure 1 shows a perspective view of a helicopter 10, comprising a helicopter lighting system 30 according to an exemplary embodiment of the invention.

The helicopter 10 comprises a fuselage 12, a main rotor 14 and a tail rotor 16. Although not explicitly shown in the Figures, the helicopter 10 alternatively may comprise two counter-rotating main rotors 14 and no tail rotor 16.

The helicopter 10 further comprises a cockpit 18 and a landing gear. The landing gear may include wheels 20, as shown in Figure 1, and/or skids (not shown).

A helicopter lighting system 30 according to an exemplary embodiment of the invention is mounted to the fuselage 12, in particular to a bottom portion of the fuselage 12.

In alternative embodiments, which are not shown in the Figures, one or more helicopter lighting systems according to exemplary embodiments of the invention additionally or alternatively may be mounted to other portions of the fuselage 12 and/or to the landing gear 20 of the helicopter 10.

Figure 2 shows an enlarged schematic side view of the helicopter lighting system 30.

The helicopter lighting system 30 includes a docking station 32, which is mounted to the helicopter 10, in particular to an underside of the fuselage 12 of the helicopter 10. The docking station 32 is configured for allowing an unmanned aerial vehicle ("UAV") 100 to dock to and to separate from the docking station 32.

The helicopter lighting system 30 further includes an unmanned aerial vehicle 100, which is configured for docking to and separating from the docking station 32.

The details of the exemplary embodiment of the helicopter lighting system 30 will be described below with joint reference to Fig. 2 and the ensuing Figures.

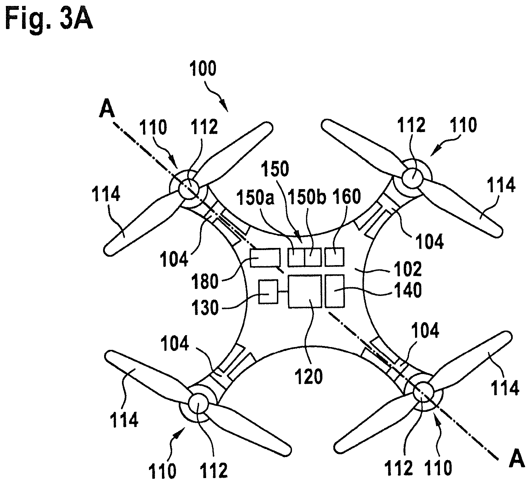

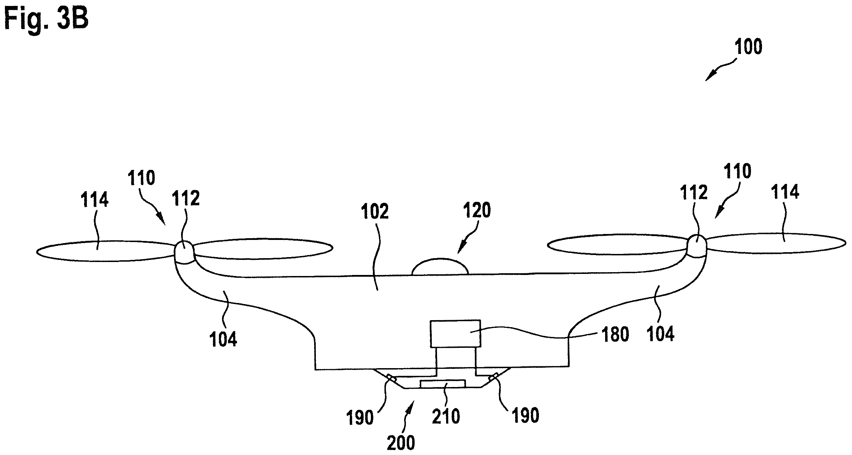

Figure 3A shows a further enlarged plan view of the unmanned aerial vehicle 100 of Figure 2, when viewed from below, i.e. when viewed from the side facing away from the helicopter 10, when the unmanned aerial vehicle 100 is docked to the docking station, as depicted in Figures 1 and 2. Figure 3B shows a cross-sectional view of the unmanned aerial vehicle 100 along line A-A depicted in Figure 3A.

In the exemplary embodiment depicted in the Figures, the unmanned aerial vehicle 100 is a multicopter. In particular, in the exemplary embodiment shown in Figure 3A, the unmanned aerial vehicle 100 is a quadrocopter, i.e. it has four rotors 110. The unmanned aerial vehicle 100 may have more or less rotors 110. The unmanned aerial vehicle 100 may in particular have eight rotors 110, thus operating as an octocopter.

The unmanned aerial vehicle 100 has a vehicle body 102 and four rotor support arms 104 extending from the vehicle body 102. Each of the four rotor support arms 104 supports a rotor 110.

Each of the four rotors 110 has a rotor hub 112 and two rotor blades 114. In the exemplary embodiment depicted in Figure 3A, the two rotor blades 114 of each rotor 110 are separate elements, each element individually mounted to the rotor hub 112. The two rotor blades 114 of each rotor 110 may also be formed as an integrated structure and may be attached to the rotor hub 112 as a single integrated element. It is pointed out that the rotors 110 may have more than two rotor blades 114 as well.

In operation, the rotor blades 114 rotate around the rotor hubs 112 providing lift to the unmanned aerial vehicle 100. The rotating speeds of the rotor blades 114 of the rotors 110 are controlled by a flight controller 150a of the unmanned aerial vehicle 100. By adapting the relative rotating speeds of the four rotors 110, the unmanned aerial vehicle 100 is steerable and can be flown into desired flight directions. The mechanics of flying and steering a multicopter 100 are known to the skilled person.

The unmanned aerial vehicle 100 may comprise spacers 116, extending from the vehicle body 102 in a direction that is oriented basically perpendicularly to the plane in which the four rotor support arms 104 extend. The spacers 116 are depicted only in Figures 1, 3, 6, 7, and 8, but not in Figures 3A and 3B. The spacers 116 may prevent the vehicle body 102 and the rotors 110 from bumping against the helicopter 10 and/or the docking station 32, when the unmanned aerial vehicle 100 approaches the docking station 32. The spacers 116 may be made at least partially from an elastic material.

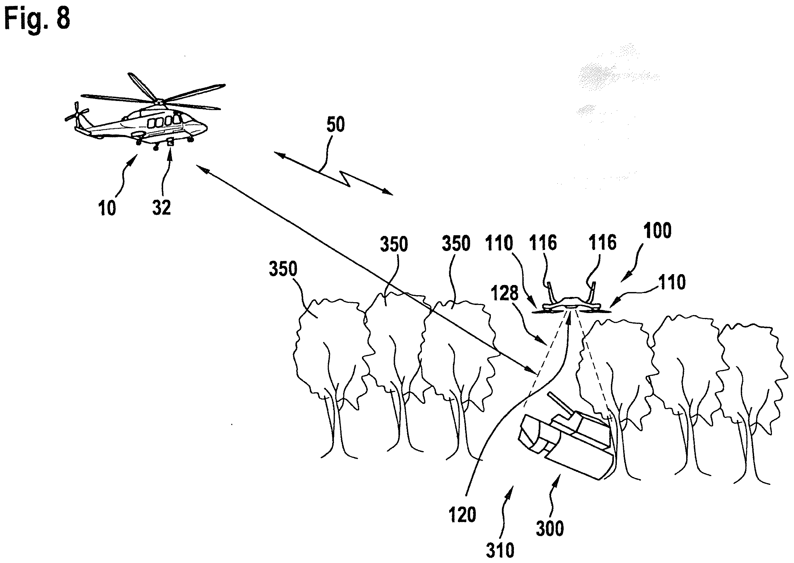

The unmanned aerial vehicle 100 further comprises at least one lighting device 120, which is configured for illuminating at least one target object 300 or area 310 (cf. Figure 8) which is visible from the helicopter 10, in particular below the helicopter 10.

In the embodiment depicted in Figure 3A, the unmanned aerial vehicle 100 comprises a lighting device 120, which is arranged in the center of the unmanned aerial vehicle 100.

In alternative embodiments, which are not explicitly depicted in the Figures, the at least one lighting device 120 may be located at other positions than the center of the unmanned aerial vehicle 100, and/or the unmanned aerial vehicle 100 may comprise a plurality of lighting devices 120, which may be individually switchable. The plurality of lighting devices 120 may be arranged at different positions of the unmanned aerial vehicle 100 or may be arranged in a closely packed arrangement, such as a matrix arrangement. The plurality of lighting devices 120 may be oriented in different directions, such that a switching of individual ones or respective subsets of the plurality of lighting devices 120 may result in different light outputs.

In general, in a configuration comprising a plurality of individually switchable lighting devices 120, the distribution, in particular the direction, of the light emitted by the unmanned aerial vehicle 100 may be modified by selectively switching the plurality of lighting devices 120 on/off.

The at least one lighting device 120 may be mounted to the vehicle body 102 in a fixed orientation.

Alternatively, the at least one lighting device 120 may be movably mounted to the vehicle body 102, in order to allow for changing the direction of light emitted by the at least one lighting device 120 with respect to vehicle body 102.

The unmanned aerial vehicle 100 may in particular comprise a lighting device moving mechanism 130, which is configured for moving, in particular tilting and/or pivoting, the at least one lighting device 120 or at least a portion of the at least one lighting device 120 with respect to the vehicle body 102.

In the embodiment depicted in the Figures, the lighting device 120 is provided on the same side of the vehicle body 102 as the rotors 110. In further embodiments, which are not depicted in the Figures, one or more lighting devices 120 may be provided on the other side of the vehicle body 102, i.e. on the side opposite to the rotors 110.

The at least one lighting device 120 may include at least one lighting device, providing a search light output, and/or at least one lighting device, providing a flood light output. The at least one lighting device may in particular be switchable between a flood light mode and a search light mode.

A search light output is characterized by a relatively narrow light beam, illuminating a relatively small area 310 with high light intensity. The search light output may also be referred to as a spot light beam. A flood light output is characterized by distributing the emitted light over a larger area 310. The light intensity at a specific point may be lower than in the light beam of the search light output. On the other hand, as the flood light output provides for simultaneous illumination of a larger area 310 than a spot light beam, there may be no need of controlling the light beam to a specific target object 300.

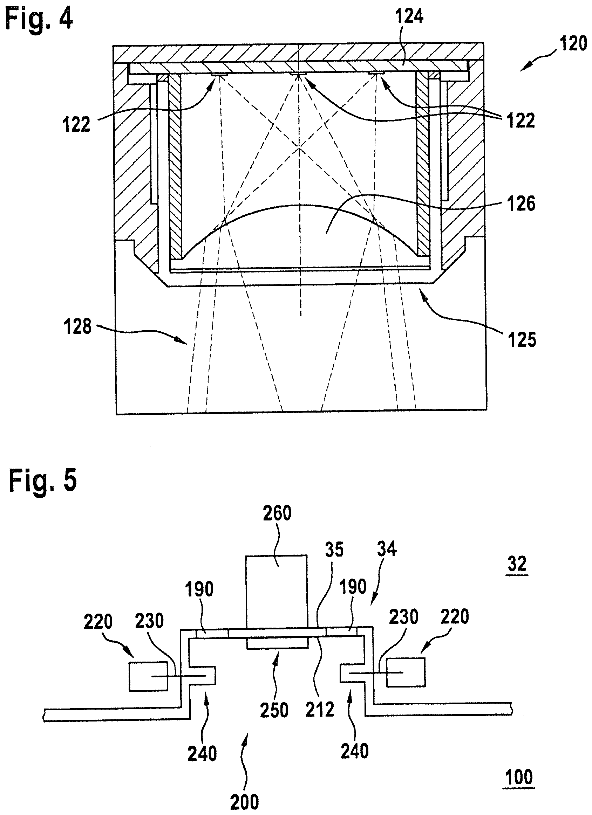

Figure 4 depicts a cross-sectional side view through a lighting device 120 as it may be employed in an unmanned aerial vehicle 100 of a helicopter lighting system according to an exemplary embodiment of the invention.

The lighting device 120 comprises at least one light source 122. The at least one light source 122 may in particular be at least one LED. A plurality of light sources 122 may be formed on a common substrate 124. In the embodiment depicted in Figure 4, the lighting device 120 comprises three light sources 122 formed on a common substrate or (printed) circuit board 124. The light sources 122 may be individually or collectively switchable. The distribution of light, emitted by the lighting device 120, may be adjustable by individually switching the plurality of light sources 122.

The lighting device 120 further comprises at least one optical element 126, in particular a lens 126, which is configured for directing and focusing the light, emitted by the at least one light source 122, and forming a light beam 128, emitted by the lighting device 120.

Although only a single lens 126 is depicted in Figure 4, the optical element 126 may also include a reflector and/or a shutter in addition or alternatively to the lens 126. The optical element 126 may also include a plurality of optical elements 126.

The at least one optical element 126 may be adjustable and/or movable for adjusting the light, emitted by the lighting device 120. For example, the at least one optical element 126 may be adjustable and/or movable for switching between the flood light mode and the search light mode and/or for adapting a focus of the light beam 128, emitted in the search light mode.

The lighting device 120 further comprises a light transmissive cover 125, covering and protecting the light source(s) 122 and the at least one optical element 126.

The unmanned aerial vehicle 100 also comprises a flight controller 150a, which is configured for controlling the flight of the unmanned aerial vehicle 100, and a lighting controller 150b, which is configured for controlling the operation of the at least one lighting device 120 (see Figure 3A). The lighting controller 150b is also configured for controlling the operation of the lighting device moving mechanism 130, if present.

The flight controller 150a and the lighting controller 150b may be provided as two separate controllers 150a, 150b. Alternatively, the flight controller 150a and the lighting controller 150b may be provided as an integrated controller 150, which is configured for controlling both the flight of the unmanned aerial vehicle 100 and the operation of the at least one lighting device 120.

The at least one controller 150, 150a, 150b includes or is connected with a communication device 160, which is configured for communication with a corresponding communication device 36 provided at the helicopter 10 (see Figure 2), in particular within a corresponding communication device 36 provided at the docking station 32, for exchanging information between the helicopter 10 and the unmanned aerial vehicle 100. The communication devices 36, 160 may each include a transmitter and a receiver. It is also possible that the communication device 36 includes a transmitter only and the communication device 160 include a receiver only.

Control commands for controlling the flight of the unmanned aerial vehicle 100 and/or the operation of the at least one lighting device 120 may be transmitted from the helicopter 10 to the unmanned aerial vehicle 100 via a data connection 50 (see Figure 8), established between the two communication devices 36, 160.

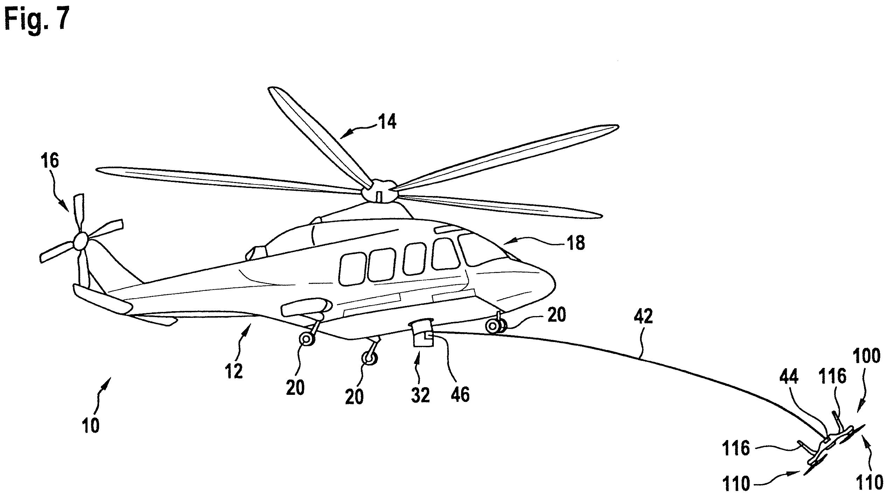

Said data connection 50 may be a wireless data connection, as indicated in Figure 8, or a wired data connection. A wired data connection will be discussed in more detail further below with reference to Figure 7.

Alternatively and/or additionally, the at least one controller 150, 150a, 150b may be configured for operating at least temporarily autonomously, i.e. without receiving commands from the helicopter 10. The at least one controller 150, 150a, 150b may in particular be configured for operating autonomously, in case the data connection 50 between the helicopter 10 and the unmanned aerial vehicle 100 is interrupted.

In order to allow the at least one controller 150, 150a, 150b to operate autonomously, the unmanned aerial vehicle 100 may comprise at least one sensor 140, such as a camera and/or a radar sensor.

The at least one controller 150, 150a, 150b may by configured for controlling the unmanned aerial vehicle 100 and/or the at least one lighting device 120 in such a manner that the light beam 128, emitted by the at least one lighting device 120, automatically follows a target object 300, detected by the at least one sensor 140.

Alternatively or additionally, the unmanned aerial vehicle 100 may be configured for transmitting information, based on signals provided by the at least one sensor 140, via the data connection 50, established between the two communication devices 36, 160, to the helicopter 10.

The unmanned aerial vehicle 100 further comprises a docking portion 200, which is configured for docking with a corresponding docking portion 34 provided at the docking station 32 (see Figures 2 and 3B).

The docking portions 34, 200 are configured for establishing a mechanical connection between the unmanned aerial vehicle 100 and the docking station 32 for securely fixing the unmanned aerial vehicle 100 to the docking station 32, as it is depicted in Figures 1 and 2.

Figure 5 shows a cross-sectional view of an exemplary embodiment of corresponding docking portions 34, 200.

In the embodiment depicted in Figure 5, the docking portions 34, 200 include corresponding docking surfaces 35, 212, which may be brought into engagement, in particular into a form-fitting engagement, with each other.

The shape of the docking surfaces 35, 212, as depicted in Figure 5, is only exemplary, and other shapes of the docking surfaces 35, 212 may be employed as well.

In the embodiment depicted in Figure 5, a fixing mechanism 220, 240 is provided for securely fixing the unmanned aerial vehicle 100 to the docking station 32.

The fixing mechanism 220, 240 includes two mechanical locking mechanisms 220, located at the docking station 32. Each mechanical locking mechanism 220 comprises a movable element 230, which is movable between an extended locking position, in which it extends into a corresponding opening or channel 240 formed within the docking portion 200 of the unmanned aerial vehicle 100, and a retracted non-locking position, in which the movable element 230 does not extend into said opening 240. When arranged in their respective extending locking positions, the movable elements 230 mechanically fix the unmanned aerial vehicle 100 to the docking station 32.

The movable elements 230 may be driven electrically, electromagnetically, hydraulically and/or pneumatically between the extended locking position and the retracted non-locking position.

Alternatively or additionally, a magnetic fixing mechanism 250, 260, in particular an electromagnetic fixing mechanism 250, 260, may be provided for attracting the unmanned aerial vehicle 100 to the docking station 32 using magnetic forces, in particular electromagnetic forces.

The magnetic fixing mechanism 250, 260 may include at least one metallic or magnetic element 250, in particular a permanent magnet 250, mounted to the unmanned aerial vehicle 100. The magnetic fixing mechanism 250, 260 may further include at least one electromagnet 260 provided at the docking station 32. In such a configuration, the unmanned aerial vehicle 100 may be attractable to the docking station 32 by activating the at least one electromagnet 260. In particular, the unmanned aerial vehicle 100 may be drawn to a desired position by the magnetic fixing mechanism 250, 260, before it is locked to the docking station 32 by the two mechanical locking mechanisms 220.

In an alternative configuration, which is not explicitly depicted in the Figures, the at least one metallic or magnetic element 250 is mounted to the docking station 32, and the at least one electromagnet 260 is located within the unmanned aerial vehicle 100.

The skilled person understands that the illustration of the fixing mechanisms 220, 250, 260 in Figure 5 is only exemplary and very schematic. Other kinds of mechanical fixing mechanisms, as they are known to the skilled person, may be employed as well.

The docking portions 34, 200 may be additionally configured for establishing an electric connection between the docking station 32 and the unmanned aerial vehicle 100, for example by means of electric contacts 190 (see Figures 3B and 5), in order to allow supplying electric power to the unmanned aerial vehicle 100 for charging an electric storage device 180 provided within the unmanned aerial vehicle 100.

In an alternative embodiment not depicted in the Figures, electric power may be transferred from the docking station 32 to the unmanned aerial vehicle 100 via electromagnetic induction.

In the embodiment depicted in Figures 1, 2, and 3B, the docking portion 200 of the unmanned aerial vehicle 100 is formed on a side of the vehicle body 102 which is opposite to the rotors 110. In alternative configurations, which are not depicted in the Figures, the docking portion 200 may be formed on the same side as the rotors 110. In such a configuration, the vertical distance between the docking portion 200 and the rotors 110 needs to be large enough for providing sufficient vertical space for the rotors 110, when the unmanned aerial vehicle 100 is docked to the docking station 32.

At least one of the docking portions 34, 200 may comprise a release mechanism 38, 210 (see Figure 2), which is configured for selectively releasing the unmanned aerial vehicle 100 from the docking station 32, in order to allow the unmanned aerial vehicle 100 to separate from the docking station 32 and the helicopter 10.

The at least one release mechanism 38, 210 may be activated by a control command issued from the crew of the helicopter 10.

In order to allow the unmanned aerial vehicle 100 to pass fall winds generated by the main rotor 14 of the helicopter 10, the at least one release mechanism 38, 210 may include a launching mechanism, in particular an ejection mechanism, i.e. a mechanism which is configured for launching / ejecting the unmanned aerial vehicle 100 from the docking station 32 with a considerable horizontal speed and/or acceleration, allowing the unmanned aerial vehicle 100 to pass the region of strong falls winds below the main rotor 14 of the helicopter 10. The launching mechanism may be operated mechanically, hydraulically, pneumatically and/or pyrotechnically.

Heavy fall winds generated by the operating main rotor 14 of the helicopter 10 may also prevent the unmanned aerial vehicle 100 from reaching the docking station 32 on its own.

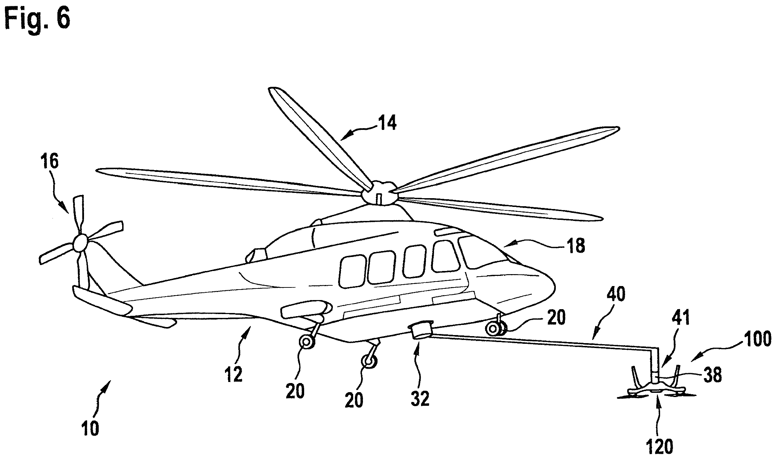

The docking station 32 therefore may comprise a docking arm 40 (see Figure 6), extending in a basically horizontal direction from the docking station 32 and allowing the unmanned aerial vehicle 100 to dock to an outer end 41 of the docking arm 40. The docking may take place in some distance from the helicopter 10, where the fall winds generated by the main rotor 14 are not as strong as in regions closer to the helicopter 10.

The docking arm 40 may be movable, in particular extendable and retractable, in order to be retracted when not in use and for retracting the unmanned aerial vehicle 100 to a position below the helicopter 10 after it has docked to the outer end 41 of the docking arm 40.

The docking arm 40 may be pivotable around a vertical axis extending basically parallel to or coinciding with a rotating axis of the main rotor 14 of the helicopter 10, in order to allow the unmanned aerial vehicle 100 to selectively dock to the docking arm 40 in a region in front of, behind or laterally from the helicopter 10.

The maximum length of the docking arm 40 may depend on the dimensions of the helicopter 10, in particular on the diameter of the main rotor 14. The docking arm may in particular have a maximum length of 2 m (6,56 ft) to 10 m (32,81 ft), in particular a maximum length of 4 m (13,12 ft) to 8 m (26,25 ft), more particularly a maximum length of 5 m (16,41 ft).

The helicopter lighting system 30 may further comprise a mechanical tethering device 42, extending between the docking station 32 and the unmanned aerial vehicle 100 and mechanically connecting the unmanned aerial vehicle 100 with the docking station 32, as it is depicted in Figure 7. The mechanical tethering device 42, for example, may be a longitudinal elastic element, such as a line or a cord, which may comprise steel and/or a synthetic material.

The mechanical tethering device 42 may be extendable in order to allow the unmanned aerial vehicle 100 to operate in some distance from the docking station 32. The mechanical tethering device 42 may for example be extendable up to a length of 250 m (820,25 ft).

The docking station 32 may comprise a retracting mechanism, which is configured for retracting the mechanical tethering device 42 and for pulling the unmanned aerial vehicle 100 back to the docking station 32.

Such a configuration allows the unmanned aerial vehicle 100 to securely pass fall winds generated by the main rotor 14 in the vicinity of the helicopter 10, for returning to the docking station 32. It further allows retracting the unmanned aerial vehicle 100 back to the docking station 32 in case of a malfunction, in particular in case of a malfunction of the rotors 110, which prevents the unmanned aerial vehicle 100 from returning to the docking station 32 on its own.

The tethering device 42 may include one or more electric lines establishing a wired data connection between the unmanned aerial vehicle 100 and the docking station 32, which allows transmitting control commands from the helicopter 10 to the unmanned aerial vehicle 100. The wired data connection may further allow transmitting sensor signals from the unmanned aerial vehicle 100 to the helicopter 10. The wired data connection may be provided instead of or in addition to a wireless data connection 50 established between the unmanned aerial vehicle 100 and the docking station 32, as indicated in Figure 8.

The tethering device 42 may further include one or more electric power lines for supplying electric energy from the helicopter 10 to the unmanned aerial vehicle 100.

The unmanned aerial vehicle 100 and/or the docking station 32 may comprise a separating mechanism 44, 46, which allows deliberately separating the tethering device 42 from the unmanned aerial vehicle 100 and/or from the docking station 32, respectively.

With such a separating mechanism 44, 46, the tethering device 42 may be detached from the unmanned aerial vehicle 100 and/or from the docking station 32, in case the unmanned aerial vehicle 100 gets stuck in an obstacle 350 and therefore cannot be retracted to the docking station 32, or in case the unmanned aerial vehicle 100 is intended to operate in large distances from the helicopter 10, which exceed the maximum length of the tethering device 42.

The separating mechanism 44, 46 may be an electromagnetic mechanism, which is activated by a detach command sent to the unmanned aerial vehicle 100 and/or to the docking station 32, respectively.

Alternatively or additionally, the separating mechanism 44, 46 may be a purely mechanical mechanism which is configured for separating the tethering device 42 from the unmanned aerial vehicle 100 and/or from the docking station 32 in case a force acting on the tethering device 42 exceeds a predetermined limit. The separating mechanism 44, 46 may in particular be implemented as a weak portion of the tethering device 42, which is configured to break when the force acting on the tethering device 42 exceeds the predetermined limit.

Figure 8 depicts a helicopter lighting system 30 according to an exemplary embodiment of the invention in operation.

In the example depicted in Figure 8, a target object 300 is to be illuminated and observed from the helicopter 10. However, obstacles 350, such as trees, situated between the target object 300 and the helicopter 10 prevent the helicopter 10 from efficiently illuminating the target object 300 by means of lighting devices (not shown) mounted to the helicopter 10.

In case of a hostile target object 300, the presence of obstacles 350 between the target object 300 and the helicopter 10 may be desirable for providing cover to the helicopter 10. This may prevent the helicopter 10 from moving to a position in which there are no obstacles 350 between the target object 300 and the helicopter 10.

According to an exemplary embodiment of the invention, the unmanned aerial vehicle 100 of the helicopter lighting system 30 is separated from the docking station 32 and directed to a position that allows illuminating the target object 300 with a light beam 128 by operating the at least one lighting device 120 of the unmanned aerial vehicle 100.

In case the unmanned aerial vehicle 100 is equipped with a sensor 140, such as a camera or a radar sensor, the unmanned aerial vehicle 100 additionally may send information, such as optical or radar images, gathered by the sensor 140 to the helicopter 10 for allowing the crew of the helicopter 10 to observe the target object 300 even better without moving the helicopter 10 out of the cover provided by the obstacles 350.

## Claims

1. Helicopter lighting system (30) comprising:
a docking station (32), configured to be mounted to a helicopter (10) and configured for allowing an unmanned aerial vehicle (100) to dock to and to separate from the docking station (32); and
an unmanned aerial vehicle (100), in particular an unmanned aerial vehicle (100) of a multicopter type, configured for docking to and separating from the docking station (32), the unmanned aerial vehicle (100) including at least one adjustable lighting device (120), which allows adjusting the distribution of light emitted by the adjustable lighting device (120), and which is configured for illuminating at least one target object (300) or area (310) which is visible from the helicopter (10);
wherein the at least one adjustable lighting device (120) comprises an adjustable optical element (126), which is adjustable for modifying the distribution of light emitted by the respective lighting device (120); and/or
wherein the at least one adjustable lighting device (120) comprises a plurality of light sources (122), which are individually switchable for modifying the distribution of light emitted by the respective lighting device (120); and
wherein modifying the distribution of light emitted by the respective lighting device (120) by adjusting the adjustable optical element (126) and/or by individually switching the plurality of light sources (122) includes at least one of:
switching between a flood light mode and a search light mode;
adapting a focus of a light beam emitted by the at least one adjustable lighting device (120) in the search light mode; and
changing a direction of the light beam emitted by the at least one adjustable lighting device (120) in the search light mode.

2. Helicopter lighting system (30) according to claim 1, further comprising a wired or wireless data connection (50) between the unmanned aerial vehicle (100) and the helicopter (10), in particular the docking station (32) mounted to the helicopter (10), wherein the data connection (50) is configured to allow transmitting control commands from the helicopter (10) to the unmanned aerial vehicle (100).

3. Helicopter lighting system (30) according to claim 1 or 2, further comprising a tethering device (42) extending between the docking station (32) and the unmanned aerial vehicle (100) and mechanically connecting the unmanned aerial vehicle (100) with the docking station (32); wherein the tethering device (42) in particular allows pulling the unmanned aerial vehicle (100) back to the docking station (32).

4. Helicopter lighting system (30) according to claim 3, wherein the tethering device (42) is deliberately detachable from the unmanned aerial vehicle (100) and/or from the docking station (32); wherein the tethering device (42) in particular is detachable from the unmanned aerial vehicle (100) and/or from the docking station (32) by sending a detach command to the unmanned aerial vehicle (100) and/or to the docking station (32).

5. Helicopter lighting system (30) according to any of the preceding claims, wherein the docking station (32) includes a launching device (38, 310), which is configured for launching the unmanned aerial vehicle (100); wherein the launching device (38, 310) in particular includes an ejection device, which is configured for ejecting the unmanned aerial vehicle (100) from the docking station (32).

6. Helicopter lighting system (30) according to any of the preceding claims, wherein the docking station (32) includes a docking arm (40) extending from the docking station (32) and allowing the unmanned aerial vehicle (100) to dock to the docking arm (40).

7. Helicopter lighting system (30) according to any of the preceding claims, wherein the at least one adjustable lighting device (120) is configured for illuminating target objects (300) and/or areas (310) located at a distance of between 5 m and 100 m, or at a distance of between 16,41 ft and 328,10 ft, from the unmanned aerial vehicle (100), in particular target objects (300) and/ or areas (310) located at a distance of between 10 m and 50 m, or at a distance of between 32,81 ft and 164,05 ft, from the unmanned aerial vehicle (100), more particularly target objects (300) and/or areas (310) located at a distance of about 20 m, or at a distance of about 65,62 ft, from the unmanned aerial vehicle (100).

8. Helicopter lighting system (30) according to any of the preceding claims, wherein the unmanned aerial vehicle (100) comprises a plurality of lighting devices (120), wherein the plurality of lighting devices (120) in particular are individually switchable and adjustable.

9. Helicopter lighting system (30) according to any of the preceding claims, wherein the unmanned aerial vehicle (100) comprises a lighting controller (150b), which is configured for controlling the operation of the at least one adjustable lighting device (120), in particular for adjusting the distribution of light emitted by the at least one adjustable lighting device (120).

10. Helicopter (10) comprising a helicopter lighting system (30) according to any of the preceding claims, wherein the docking station (32) is mounted to the helicopter (10), in particular to a fuselage (12) of the helicopter (10), more particularly to an underside of the fuselage (12) of the helicopter (10).

11. Helicopter (10) according to claim 10, wherein the unmanned aerial vehicle (100) is controllable from the helicopter (10) via a wired or wireless data connection (50).

12. Method of illuminating an environment of a helicopter (10) with a helicopter lighting system (30), the helicopter lighting system (30) comprising:
a docking station (32) mounted to the helicopter (10); and
an unmanned aerial vehicle (100) including at least one adjustable lighting device (120) comprising an adjustable optical element (126) and/or a plurality of light sources (122), which are individually switchable for modifying the distribution of light emitted by the respective lighting device (120), wherein the adjustable optical element (126) and/or the plurality of light sources (122) allow modifying the distribution of light emitted by the adjustable lighting device (120), wherein the unmanned aerial vehicle (100) is configured for docking to and separating from the docking station (32);
wherein the method includes:
separating the unmanned aerial vehicle (100) from the docking station (32);
activating the at least one adjustable lighting device (120); and
illuminating at least one target object (300) or area (310) visible from the helicopter (10) with the at least one adjustable lighting device (120) of the unmanned aerial vehicle (100) by controlling the operation, in particular the flight operation, of the unmanned aerial vehicle (100) and by modifying the distribution of light emitted by the at least one adjustable lighting device (120) by adjusting the adjustable optic element (126) and/or by individually switching the plurality of light sources (122);
wherein modifying the distribution of light emitted by the respective lighting device (120) includes at least one of
switching between a flood light mode and a search light mode;
adapting the focus of a light beam emitted by the at least one adjustable lighting device (120) in the search light mode; and
changing a direction of the light beam emitted by the at least one adjustable lighting device (120) in the search light mode.

13. Method according to claim 12, wherein the method includes controlling the operation of the unmanned aerial vehicle (100) by transmitting control commands from the helicopter (10) to the unmanned aerial vehicle (100), wherein the control commands are transmitted via at least one wire (50) or wirelessly.

14. Method according to claim 12 or 13, wherein separating the unmanned aerial vehicle (100) includes launching the unmanned aerial vehicle (100) from the docking station (32), in particular ejecting the unmanned aerial vehicle (100) from the docking station (32), and/or wherein the method further includes docking the unmanned aerial vehicle (100) to the docking station (32), in particular docking the unmanned aerial vehicle (100) to a docking arm (40) extending from the docking station (32).

## Patentansprüche

1. Hubschrauberbeleuchtungssystem (30), das Folgendes umfasst:
eine Andockstation (32), die dazu konfiguriert ist, an einem Hubschrauber (10) montiert zu sein, und dazu konfiguriert ist, einem unbemannten Luftfahrzeug (100) zu ermöglichen, an der Andockstation (32) anzudocken und sich von dieser zu trennen; und
ein unbemanntes Luftfahrzeug (100), insbesondere ein unbemanntes Luftfahrzeug (100) nach Art eines Multikopters, das dazu konfiguriert ist, an die Andockstation (32) anzudocken und sich von dieser zu trennen, wobei das unbemannte Luftfahrzeug (100) mindestens eine einstellbare Beleuchtungsvorrichtung (120) beinhaltet, die ein Einstellen der Verteilung von durch die einstellbare Beleuchtungsvorrichtung (120) emittiertem Licht ermöglicht und die zum Beleuchten mindestens eines Zielobjekts (300) oder - bereichs (310) konfiguriert ist, das bzw. der von dem Hubschrauber (10) aus sichtbar ist;
wobei die mindestens eine einstellbare Beleuchtungsvorrichtung (120) ein einstellbares optisches Element (126) umfasst, das zum Modifizieren der Verteilung von durch die jeweilige Beleuchtungsvorrichtung (120) emittiertem Licht einstellbar ist; und/oder
wobei die mindestens eine einstellbare Beleuchtungsvorrichtung (120) eine Mehrzahl von Lichtquellen (122) umfasst, die zum Modifizieren von durch die jeweilige Beleuchtungsvorrichtung (120) emittiertem Licht einzeln schaltbar sind; und
wobei ein Modifizieren der Verteilung von durch die jeweilige Beleuchtungsvorrichtung (120) emittiertem Licht durch Einstellen des einstellbaren optischen Elements (126) und/oder durch einzelnes Schalten der Mehrzahl von Lichtquellen (122) mindestens eines von Folgendem beinhaltet:
Umschalten zwischen einem Flutlichtmodus und einem Suchlichtmodus;
Anpassen eines Fokus eines durch die mindestens eine einstellbare Beleuchtungsvorrichtung (120) emittierten Lichtstrahls in dem Suchlichtmodus; und
Ändern einer Richtung des durch die mindestens eine einstellbare Beleuchtungsvorrichtung (120) emittierten Lichtstrahls in dem Suchlichtmodus.

2. Hubschrauberbeleuchtungssystem (30) nach Anspruch 1, ferner umfassend eine drahtgebundene oder drahtlose Datenverbindung (50) zwischen dem unbemannten Luftfahrzeug (100) und dem Hubschrauber (10), insbesondere der Andockstation (32), die an dem Hubschrauber (10) montiert ist, wobei die Datenverbindung (50) dazu konfiguriert ist, ein Übertragen von Steuerbefehlen von dem Hubschrauber (10) an das unbemannte Luftfahrzeug (100) zu ermöglichen.

3. Hubschrauberbeleuchtungssystem (30) nach Anspruch 1 oder 2, ferner umfassend eine Anbindungsvorrichtung (42), die sich zwischen der Andockstation (32) und dem unbemannten Luftfahrzeug (100) erstreckt und das unbemannte Luftfahrzeug (100) mit der Andockstation (32) mechanisch verbindet; wobei die Anbindungsvorrichtung (42) insbesondere ein Zurückziehen des unbemannten Luftfahrzeugs (100) zu der Andockstation (32) ermöglicht.

4. Hubschrauberbeleuchtungssystem (30) nach Anspruch 3, wobei die Anbindungsvorrichtung (42) von dem unbemannten Luftfahrzeug (100) und/oder von der Andockstation (32) gezielt lösbar ist; wobei die Anbindungsvorrichtung (42) insbesondere durch Senden eines Ablösebefehls an das unbemannte Luftfahrzeug (100) und/oder an die Andockstation (32) von dem unbemannten Luftfahrzeug (100) und/oder von der Andockstation (32) lösbar ist.

5. Hubschrauberbeleuchtungssystem (30) nach einem der vorhergehenden Ansprüche, wobei die Andockstation (32) eine Startvorrichtung (38, 310) beinhaltet, die zum Starten des unbemannten Luftfahrzeugs (100) konfiguriert ist; wobei die Startvorrichtung (38, 310) insbesondere eine Abwurfvorrichtung beinhaltet, die zum Abwerfen des unbemannten Luftfahrzeugs (100) von der Andockstation (32) konfiguriert ist.

6. Hubschrauberbeleuchtungssystem (30) nach einem der vorhergehenden Ansprüche, wobei die Andockstation (32) einen Andockarm (40) beinhaltet, der sich von der Andockstation (32) erstreckt und dem unbemannten Luftfahrzeugs (100) ermöglicht, an den Andockarm (40) anzudocken.

7. Hubschrauberbeleuchtungssystem (30) nach einem der vorhergehenden Ansprüche, wobei die mindestens eine einstellbare Beleuchtungsvorrichtung (120) zum Beleuchten von Zielobjekten (300) und/oder -bereichen (310) konfiguriert ist, die sich in einem Abstand zwischen 5 m und 100 m, oder in einem Abstand zwischen 16,41 ft und 328,10 ft, von dem unbemannten Luftfahrzeug (100) befinden, insbesondere von Zielobjekten (300) und/oder -bereichen (310), die sich in einem Abstand zwischen 10 m und 50 m, oder in einem Abstand zwischen 32,81 ft und 164,05 ft, von dem unbemannten Luftfahrzeug (100) befinden, weiterhin insbesondere von Zielobjekten (300) und/oder -bereichen (310), die sich in einem Abstand von etwa 20 m, oder in einem Abstand von etwa 65,62 ft, von dem unbemannten Luftfahrzeug (100) befinden.

8. Hubschrauberbeleuchtungssystem (30) nach einem der vorhergehenden Ansprüche, wobei das unbemannte Luftfahrzeug (100) eine Mehrzahl von Beleuchtungsvorrichtungen (120) umfasst, wobei die Mehrzahl von Beleuchtungsvorrichtungen (120) insbesondere einzeln schaltbar und einstellbar sind.

9. Hubschrauberbeleuchtungssystem (30) nach einem der vorhergehenden Ansprüche, wobei das unbemannte Luftfahrzeug (100) eine Beleuchtungssteuerung (150b) umfasst, die zum Steuern des Betriebs der mindestens einen einstellbaren Beleuchtungsvorrichtung (120) konfiguriert ist, insbesondere zum Einstellen der Verteilung von durch die mindestens eine verstellbare Beleuchtungsvorrichtung (120) emittiertem Licht.

10. Hubschrauber (10), umfassend ein Hubschrauberbeleuchtungssystem (30) nach einem der vorhergehenden Ansprüche, wobei die Andockstation (32) an dem Hubschrauber (10), insbesondere an einem Rumpf (12) des Hubschraubers (10), montiert ist, weiter insbesondere an einer Unterseite des Rumpfs (12) des Hubschraubers (10).

11. Hubschrauber (10) nach Anspruch 10, wobei das unbemannte Luftfahrzeug (100) von dem Hubschrauber (10) aus über eine drahtgebundene oder drahtlose Datenverbindung (50) steuerbar ist.

12. Verfahren zum Beleuchten einer Umgebung eines Hubschraubers (10) mit einem Hubschrauberbeleuchtungssystem (30), wobei das Hubschrauberbeleuchtungssystem (30) Folgendes umfasst:
eine Andockstation (32), die an dem Hubschrauber (10) montiert ist; und
ein unbemanntes Luftfahrzeug (100), das mindestens eine einstellbare Beleuchtungsvorrichtung (120) beinhaltet, die ein einstellbares optisches Element (126) und/oder eine Mehrzahl von Lichtquellen (122) umfasst, die zum Modifizieren der Verteilung von durch die jeweilige Beleuchtungsvorrichtung (120) emittiertem Licht einzeln schaltbar sind, wobei das einstellbare optische Element (126) und/oder die Mehrzahl von Lichtquellen (122) ein Modifizieren der Verteilung von durch die einstellbare Beleuchtungsvorrichtung (120) emittiertem Licht ermöglichen, wobei das unbemannte Luftfahrzeug (100) zum Andocken an die und Trennen von der Andockstation (32) konfiguriert ist;
wobei das Verfahren Folgendes beinhaltet:
Trennen des unbemannten Luftfahrzeugs (100) von der Andockstation (32);
Aktivieren der mindestens einen einstellbaren Beleuchtungsvorrichtung (120); und
Beleuchten mindestens eines von dem Hubschrauber (10) aus sichtbaren Zielobjekts (300) oder -bereichs (310) mit der mindestens einen einstellbaren Beleuchtungsvorrichtung (120) des unbemannten Luftfahrzeugs (100) durch Steuern des Betriebs, insbesondere des Flugbetriebs, des unbemannten Luftfahrzeugs (100) und durch Modifizieren der Verteilung von durch die mindestens eine einstellbare Beleuchtungsvorrichtung (120) emittiertem Licht durch Einstellen des einstellbaren optischen Elements (126) und/oder durch einzelnes Schalten der Mehrzahl von Lichtquellen (122);
wobei das Modifizieren der Verteilung von durch die jeweilige Beleuchtungsvorrichtung (120) emittiertem Licht mindestens eines beinhaltet von
Umschalten zwischen einem Flutlichtmodus und einem Suchlichtmodus;
Anpassen des Fokus eines durch die mindestens eine einstellbare Beleuchtungsvorrichtung (120) emittierten Lichtstrahls in dem Suchlichtmodus; und
Ändern einer Richtung des durch die mindestens eine einstellbare Beleuchtungsvorrichtung (120) emittierten Lichtstrahls in dem Suchlichtmodus.

13. Verfahren nach Anspruch 12, wobei das Verfahren ein Steuern des Betriebs des unbemannten Luftfahrzeugs (100) durch Übertragen von Steuerbefehlen von dem Hubschrauber (10) an das unbemannte Luftfahrzeug (100) beinhaltet, wobei die Steuerbefehle über mindestens einen Draht (50) oder drahtlos übertragen werden.

14. Verfahren nach Anspruch 12 oder 13, wobei das Trennen des unbemannten Luftfahrzeugs (100) ein Starten des unbemannten Luftfahrzeugs (100) von der Andockstation (32), insbesondere ein Abwerfen des unbemannten Luftfahrzeugs (100) von der Andockstation (32), beinhaltet und/oder wobei das Verfahren ferner ein Andocken des unbemannten Luftfahrzeugs (100) an die Andockstation (32) beinhaltet, insbesondere ein Andocken des unbemannten Luftfahrzeugs (100) an einen Andockarm (40), der sich von der Andockstation (32) erstreckt.

## Revendications

1. Système d'éclairage d'hélicoptère (30) comprenant :
une station d'accueil (32), configurée pour être montée sur un hélicoptère (10) et configurée pour permettre à un véhicule aérien sans pilote (100) de s'amarrer à et de se séparer de la station d'accueil (32) ; et
un véhicule aérien sans pilote (100), en particulier un véhicule aérien sans pilote (100) de type multicoptère, configuré pour s'amarrer à et de se séparer de la station d'accueil (32), le véhicule aérien sans pilote (100) comportant au moins un dispositif d'éclairage réglable (120), qui permet d'ajuster la distribution de lumière émise par le dispositif d'éclairage réglable (120), et qui est configuré pour éclairer au moins un objet (300) ou une zone (310) cible qui est visible depuis l'hélicoptère (10) ;
dans lequel l'au moins un dispositif d'éclairage réglable (120) comprend un élément optique réglable (126), qui est réglable pour modifier la distribution de lumière émise par le dispositif d'éclairage respectif (120) ; et/ou
dans lequel l'au moins un dispositif d'éclairage réglable (120) comprend une pluralité de sources de lumière (122), qui sont commutables individuellement pour modifier la distribution de lumière émise par le dispositif d'éclairage respectif (120) ; et
dans lequel la modification de la distribution de lumière émise par le dispositif d'éclairage respectif (120) en ajustant l'élément optique réglable (126) et/ou en commutant individuellement la pluralité de sources de lumière (122) comporte au moins l'un parmi :
la commutation entre un mode projecteur et un mode lumière de recherche ;
l'adaptation de la focalisation d'un faisceau lumineux émis par l'au moins un dispositif d'éclairage réglable (120) dans le mode lumière de recherche ; et
la modification d'une direction du faisceau lumineux émis par l'au moins un dispositif d'éclairage réglable (120) dans le mode lumière de recherche.

2. Système d'éclairage d'hélicoptère (30) selon la revendication 1, comprenant en outre une connexion de données filaire ou sans fil (50) entre le véhicule aérien sans pilote (100) et l'hélicoptère (10), en particulier la station d'accueil (32) montée sur l'hélicoptère (10), dans lequel la connexion de données (50) est configurée pour permettre la transmission de commandes de contrôle de l'hélicoptère (10) au véhicule aérien sans pilote (100).

3. Système d'éclairage d'hélicoptère (30) selon la revendication 1 ou 2, comprenant en outre un dispositif d'attache (42) s'étendant entre la station d'accueil (32) et le véhicule aérien sans pilote (100) et reliant mécaniquement le véhicule aérien sans pilote (100) avec la station d'accueil (32) ; dans lequel le dispositif d'attache (42) permet en particulier de ramener le véhicule aérien sans pilote (100) vers la station d'accueil (32).

4. Système d'éclairage d'hélicoptère (30) selon la revendication 3, dans lequel le dispositif d'attache (42) est volontairement détachable du véhicule aérien sans pilote (100) et/ou de la station d'accueil (32) ; dans lequel le dispositif d'attache (42) en particulier peut être détaché du véhicule aérien sans pilote (100) et/ou de la station d'accueil (32) en envoyant une commande de détachement au véhicule aérien sans pilote (100) et/ou à la station d'accueil (32).

5. Système d'éclairage d'hélicoptère (30) selon l'une quelconque des revendications précédentes, dans lequel la station d'accueil (32) comporte un dispositif de lancement (38, 310), qui est configuré pour lancer le véhicule aérien sans pilote (100) ; dans lequel le dispositif de lancement (38, 310) comporte en particulier un dispositif d'éjection, qui est configuré pour éjecter le véhicule aérien sans pilote (100) de la station d'accueil (32).

6. Système d'éclairage d'hélicoptère (30) selon l'une quelconque des revendications précédentes, dans lequel la station d'accueil (32) comporte un bras d'amarrage (40) s'étendant depuis la station d'accueil (32) et permettant au véhicule aérien sans pilote (100) de s'amarrer au bras d'amarrage (40).

7. Système d'éclairage d'hélicoptère (30) selon l'une quelconque des revendications précédentes, dans lequel l'au moins un dispositif d'éclairage réglable (120) est configuré pour éclairer des objets (300) et/ou des zones (310) cibles situés à une distance comprise entre 5 m et 100 m, ou à une distance comprise entre 16,41 pieds et 328,10 pieds, du véhicule aérien sans pilote (100), en particulier des objets (300) et/ou des zones (310) cibles situés à une distance comprise entre 10 m et 50 m, ou à une distance comprise entre 32,81 pieds et 164,05 pieds, du véhicule aérien sans pilote (100), plus particulièrement des objets (300) et/ou des zones (310) cibles situés à une distance d'environ 20 m, ou à une distance d'environ 65,62 pieds, du véhicule aérien sans pilote (100).

8. Système d'éclairage d'hélicoptère (30) selon l'une quelconque des revendications précédentes, dans lequel le véhicule aérien sans pilote (100) comprend une pluralité de dispositifs d'éclairage (120), dans lequel la pluralité de dispositifs d'éclairage (120) en particulier sont commutables et réglables individuellement.

9. Système d'éclairage d'hélicoptère (30) selon l'une quelconque des revendications précédentes, dans lequel le véhicule aérien sans pilote (100) comprend un contrôleur d'éclairage (150b), qui est configuré pour contrôler le fonctionnement de l'au moins un dispositif d'éclairage réglable (120), en particulier pour régler la distribution de lumière émise par l'au moins un dispositif d'éclairage réglable (120).

10. Hélicoptère (10) comprenant un système d'éclairage d'hélicoptère (30) selon l'une quelconque des revendications précédentes, dans lequel la station d'accueil (32) est montée sur l'hélicoptère (10), en particulier sur un fuselage (12) de l'hélicoptère (10), plus particulièrement sur une face inférieure du fuselage (12) de l'hélicoptère (10).

11. Hélicoptère (10) selon la revendication 10, dans lequel le véhicule aérien sans pilote (100) est contrôlable depuis l'hélicoptère (10) via une connexion de données filaire ou sans fil (50).

12. Procédé d'éclairage d'un environnement d'un hélicoptère (10) avec un système d'éclairage d'hélicoptère (30), le système d'éclairage d'hélicoptère (30) comprenant :
une station d'accueil (32) montée sur l'hélicoptère (10) ; et
un véhicule aérien sans pilote (100) comportant au moins un dispositif d'éclairage réglable (120) comprenant un élément optique réglable (126) et/ou une pluralité de sources de lumière (122), qui sont commutables individuellement pour modifier la distribution de lumière émise par le dispositif d'éclairage respectif (120), dans lequel l'élément optique réglable (126) et/ou la pluralité de sources de lumière (122) permettent de modifier la distribution de lumière émise par le dispositif d'éclairage réglable (120), dans lequel le véhicule aérien sans pilote (100) est configuré pour s'amarrer à et de se séparer de la station d'accueil (32) ;
dans lequel le procédé comporte :
la séparation du véhicule aérien sans pilote (100) de la station d'accueil (32) ;
l'activation de l'au moins un dispositif d'éclairage réglable (120) ; et
l'éclairage de l'au moins un objet (300) ou une zone (310) cible visible depuis l'hélicoptère (10) avec l'au moins un dispositif d'éclairage réglable (120) du véhicule aérien sans pilote (100) en contrôlant le fonctionnement, en particulier le fonctionnement de vol, du véhicule aérien sans pilote (100) et en modifiant la distribution de lumière émise par l'au moins un dispositif d'éclairage réglable (120) en ajustant l'élément optique réglable (126) et/ou en commutant individuellement la pluralité de sources de lumière (122) ;
dans lequel la modification de la distribution de lumière émise par le dispositif d'éclairage respectif (120) comporte au moins l'un parmi
la commutation entre un mode projecteur et un mode lumière de recherche ;
l'adaptation de la focalisation d'un faisceau lumineux émis par l'au moins un dispositif d'éclairage réglable (120) dans le mode lumière de recherche ; et
la modification de la direction du faisceau lumineux émis par l'au moins un dispositif d'éclairage réglable (120) dans le mode lumière de recherche.

13. Procédé selon la revendication 12, dans lequel le procédé comporte le contrôle du fonctionnement du véhicule aérien sans pilote (100) en transmettant des commandes de contrôle de l'hélicoptère (10) au véhicule aérien sans pilote (100), dans lequel les commandes de contrôle sont transmises via au moins un moyen filaire (50) ou sans fil.

14. Procédé selon la revendication 12 ou 13, dans lequel la séparation du véhicule aérien sans pilote (100) comporte le lancement du véhicule aérien sans pilote (100) depuis la station d'accueil (32), en particulier l'éjection du véhicule aérien sans pilote (100) depuis la station d'accueil (32), et/ou dans lequel le procédé comporte en outre l'amarrage du véhicule aérien sans pilote (100) à la station d'accueil (32), en particulier l'amarrage du véhicule aérien sans pilote (100) à un bras d'amarrage (40) s'étendant depuis la station d'accueil (32) .
